# EUROPEAN PATENT APPLICATION

(11) **EP 4 557 587 A1**
(43) Date of publication of application: **21.05.2025**
(21) Application number: 23868142.3
(22) Date of filing: 15.09.2023
(51) Int. Cl.: H02K 5/22, H02K 11/30

(54) **VEHICULE DRIVE DEVICE**

(30) Priority: 20.09.2022 JP 2022149155
(71) Applicant: AISIN CORPORATION, Kariya-shi, Aichi 448-8650 (JP); Blue Nexus Corporation, Anjo-shi, Aichi 446-0058 (JP)
(72) Inventor: KUME Akiya, Kariya-shi, Aichi 448-8650 (JP); SUGAWARA Junichi, Kariya-shi, Aichi 448-8650 (JP); KOJIMA Yoshiaki, Kariya-shi, Aichi 448-8650 (JP); SUZUKI Tomoyuki, Kariya-shi, Aichi 448-8650 (JP); YAMASAKI Shoichi, Kariya-shi, Aichi 448-8650 (JP); NAGAYA Ryosuke, Kariya-shi, Aichi 448-8650 (JP); TORII Takeshi, Anjo-shi, Aichi 446-0058 (JP)
(74) Representative: Kramer Barske Schmidtchen Patentanwälte PartG mbB
(86) International application number: PCT/JP2023/033674
(87) International publication number: WO 2024/063021

(57) **Abstract**

A vehicle drive device is disclosed that includes: a rotating electrical machine; a power transmission device disposed on one side of the rotating electrical machine in an axial direction and configured to transmit power from the rotating electrical machine to wheels; a wiring portion that electrically connects the rotating electrical machine to a power supply; and a case that houses the rotating electrical machine and the power transmission device. The wiring portion includes a connection conductor from the rotating electrical machine, and a terminal device attached to the case on the one side of the rotating electrical machine in the axial direction. The terminal device includes a conductor portion coupled at its lower end to the connection conductor. A coupling portion between the conductor portion and the connection conductor is disposed radially inward of a stator core of the rotating electrical machine as viewed in the axial direction.

## Description

### TECHNICAL FIELD

The present disclosure relates to vehicle drive devices.

### BACKGROUND ART

There is known a technique of electrically connecting a power supply and a rotating electrical machine by attaching a terminal device in the form of a terminal block from outside a case that houses the rotating electrical machine and a power transmission device.

### Related Art Documents

### Patent Documents

Patent Document 1: WO2016/035476

### SUMMARY OF THE INVENTION

### Problem to be Solved by the Invention

In the above related art, however, a fastening portion between a conductor portion of the terminal device and a connection conductor from the rotating electrical machine is located radially outward of a stator core of the rotating electrical machine as viewed in an axial direction. It is therefore difficult to reduce the size of a vehicle drive device in a direction crossing the axial direction.

In one aspect, an object of the present disclosure is to reduce the size of a vehicle drive device in a direction crossing an axial direction.

### Means for Solving the Problem

One aspect provides a rotating electrical machine including: a rotating electrical machine;
a power transmission device disposed on one side of the rotating electrical machine in an axial direction and configured to transmit power from the rotating electrical machine to a wheel;
a wiring portion that electrically connects the rotating electrical machine to a power supply; and
a case that houses the rotating electrical machine and the power transmission device.
The wiring portion includes a connection conductor from the rotating electrical machine, and a terminal device attached to the case on the one side of the rotating electrical machine in the axial direction.
The terminal device includes a conductor portion coupled, at a lower end of the conductor portion, to the connection conductor.
A coupling portion between the conductor portion and the connection conductor is disposed radially inward of a stator core of the rotating electrical machine as viewed in the axial direction.

### Effects of the Invention

In one aspect, the present disclosure can reduce the size of a vehicle drive device in a direction crossing an axial direction.

### BRIEF DESCRIPTION OF THE DRAWINGS

[FIG. 1] FIG. 1 is a schematic view of a vehicle drive device mounted on a vehicle, as viewed from above.
[FIG. 2] FIG. 2 is a sectional view of a main part of the vehicle drive device.
[FIG. 2A] FIG. 2A is a skeleton diagram showing the vehicle drive device.
[FIG. 3] FIG. 3 is a top view schematically showing a vehicle drive device according to an embodiment.
[FIG. 4] FIG. 4 is a side view schematically showing the vehicle drive device according to the embodiment.
[FIG. 5] FIG. 5 is a partial sectional view taken along line A-A in FIG. 3.
[FIG. 6] FIG. 6 is a four-view diagram of a terminal device.
[FIG. 7] FIG. 7 is an illustration of a manner in which the terminal device and a power line busbar from a rotating electrical machine 1 are coupled.
[FIG. 8] FIG. 8 is a side view schematically showing the vehicle drive device according to the embodiment.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

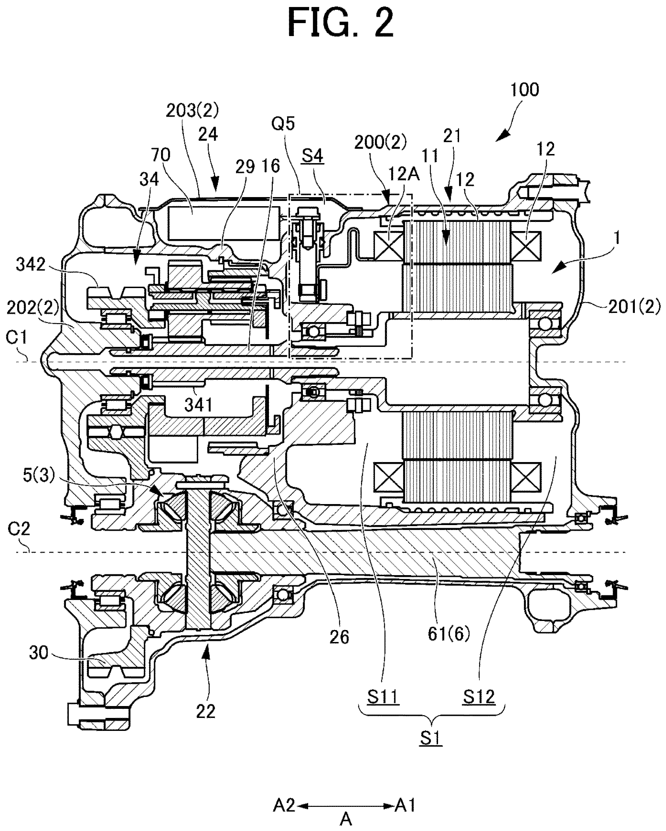

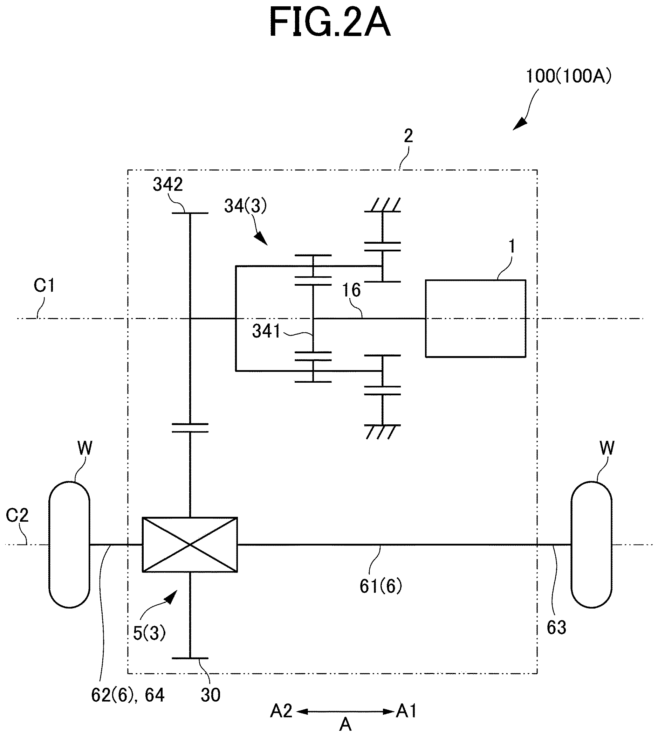

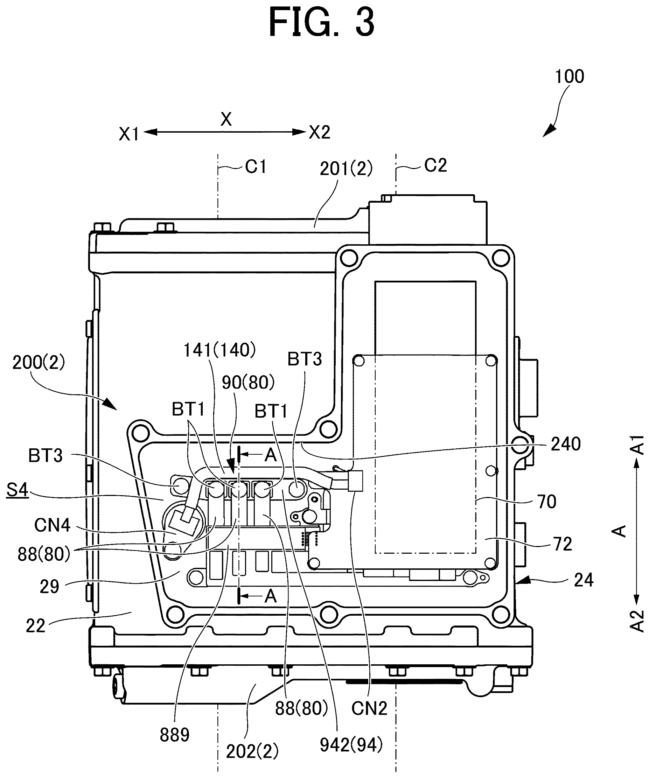

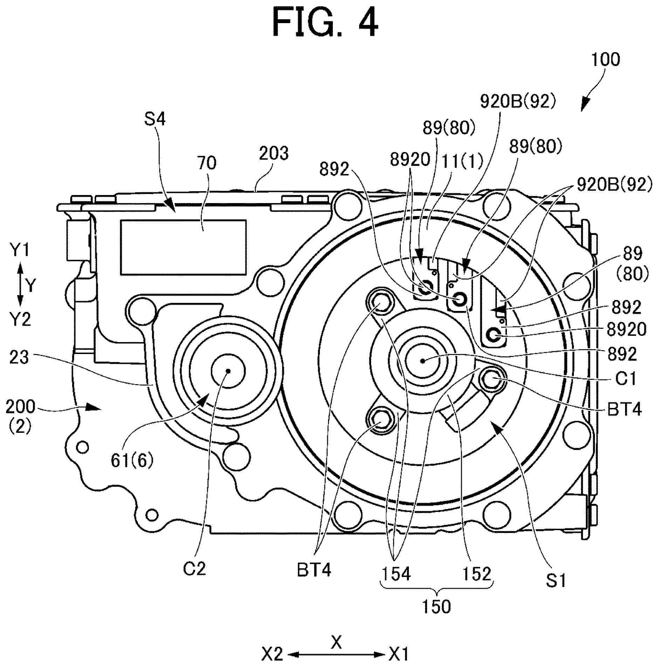

In the following description, the Y-direction (see FIG. 4 etc.) means an up-down direction when a vehicle drive device 100 is in use, that is, an up-down direction when the vehicle drive device 100 is disposed in an orientation in which it is supposed to be used. The Y1 side and the Y2 side correspond to the upper side and the lower side along the Y direction. The up-down direction need not necessarily be parallel to a vertical direction, and need only predominantly include a vertical direction component. The direction of each member in the following description represents the direction of the member mounted on the vehicle drive device 100. Terms related to the dimension of each member, the direction in which each member is disposed, and the position where each member is disposed, etc. represent concepts including a state in which there is a deviation due to a variation (variation to an extent that is allowable in manufacturing). The A-direction (see FIG. 2 etc.) corresponds to an axial direction, and the A1 side and the A2 side in the A direction are defined in FIG. 2 etc. The X-direction (see FIG. 3 etc.) is a direction perpendicular to both the A-direction and the Y-direction, the X1 side and the X2 side in the X direction are defined in FIG. 3 etc.

In the present application, "drivingly connected" refers to a state in which two rotating elements are connected such that a driving force (synonymous with torque) can be transmitted therebetween, and includes a state in which the two rotating elements are connected so as to rotate together or a state in which the two rotating elements are connected such that a driving force can be transmitted therebetween via one or more transmission members. Such transmission members include various members that transmit rotation at the same speed or at a shifted speed (e.g., a shaft, a gear mechanism, a belt, and a chain). The transmission members may include engagement devices that selectively transmit rotation and a driving force (e.g., a friction engagement device and an intermesh engagement device).

In the present specification, the "rotating electrical machine" is used as a concept including a motor (electric motor), a generator (power generator), and a motor generator that functions as both a motor and a generator as necessary. In the present specification, regarding arrangement of two members, the "two members overlap each other as viewed in a specific direction" means that, when an imaginary straight line parallel to the direction of the line of sight is moved in all directions perpendicular to the imaginary straight line, an area where the imaginary straight line intersects both of the two members is preset at least in part. In the present specification, regarding arrangement of two members, the "regions in a specific direction where the two members are disposed overlap each other" means that the region in the specific direction where one member is disposed includes at least part of the region in the specific direction where the other member is disposed.

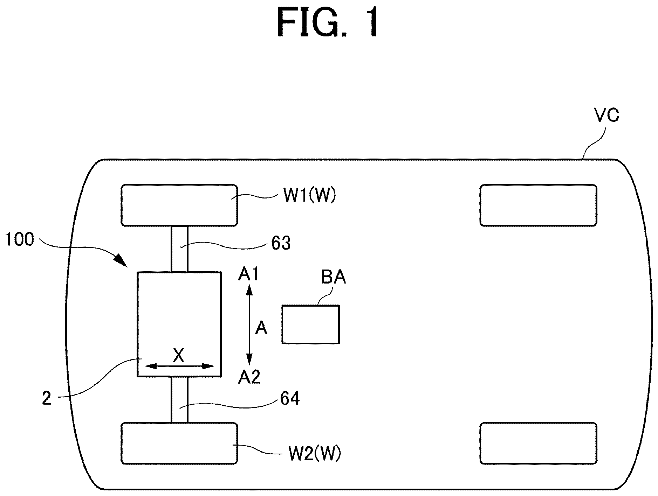

FIG. 1 is a schematic view of the vehicle drive device 100 mounted on a vehicle VC, as viewed from above. FIG. 2 is a sectional view of a main part of the vehicle drive device 100. FIG. 2A is a skeleton diagram showing the vehicle drive device 100.

As schematically shown in FIGS. 1 and 2A, the vehicle drive device 100 includes a rotating electrical machine 1, a pair of output members 6 each drivingly connected to a corresponding one of a pair of wheels W (see FIG. 1), and a transmission mechanism 3 that transmits a driving force between the rotating electrical machine 1 and the pair of output members 6. The vehicle drive device 100 further includes a case 2 that houses the rotating electrical machine 1. The case 2 also houses the pair of output members 6 and the transmission mechanism 3. In a modification, the case 2 may house only one of the pair of output members 6. The vehicle drive device 100 is applicable to any vehicle including the rotating electrical machine 1 such as a battery electric vehicle or a hybrid electric vehicle, and is also applicable to any vehicle with any drive system such as front-wheel drive or rear-wheel drive.

A first output member 61 that is one of the pair of output members 6 is drivingly connected to a first wheel W1 that is one of the pair of wheels W, and a second output member 62 that is the other of the pair of output members 6 is drivingly connected to a second wheel W2 that is the other of the pair of wheels W. As shown in FIG. 1, the vehicle VC on which the vehicle drive device 100 is mounted includes a first drive shaft 63 that rotates with the first wheel W1, and a second drive shaft 64 that rotates with the second wheel W2. The first drive shaft 63 is connected to the first wheel W1 via, for example, a constant velocity joint, and the second drive shaft 64 is connected to the second wheel W2 via, for example, a constant velocity joint. The first output member 61 is connected to the first drive shaft 63 so as to rotate with the first drive shaft 63, and the second output member 62 is connected to the second drive shaft 64 so as to rotate with the second drive shaft 64.

The vehicle drive device 100 transmits output torque of the rotating electrical machine 1 to the pair of wheels W via the pair of output members 6 to cause the vehicle VC on which the vehicle drive device 100 is mounted to travel. That is, the rotating electrical machine 1 is a driving force source for the pair of wheels W. The pair of wheels W is a pair of right and left wheels (e.g., a pair of right and left front wheels or a pair of right and left rear wheels) of the vehicle VC. The rotating electrical machine 1 may be, for example, an alternating current rotating electrical machine driven by three-phase alternating currents.

As shown in FIG. 2A, the rotating electrical machine 1 and the pair of output members 6 are disposed on two separate axes that are parallel to each other (specifically, a first axis C1 and a second axis C2). Specifically, the rotating electrical machine 1 is disposed on the first axis C1, and the pair of output members 6 is disposed on the second axis C2 different from the first axis C1. The first axis C1 and the second axis C2 are axes (imaginary axes) arranged parallel to each other. The transmission mechanism 3 includes, coaxially with the pair of output members 6 (i.e., on the second axis C2), an output gear (ring gear) 30 drivingly connected to at least one of the pair of output members 6.

The rotating electrical machine 1 is of, for example, an inner rotor type. In the rotating electrical machine 1, a rotor (not shown) that is rotatable about the first axis C1 is disposed radially inward of a stator core 11 (see FIG. 4).

The transmission mechanism 3 includes a speed reduction mechanism 34 in a power transmission path between the rotating electrical machine 1 and the output gear 30. The speed reduction mechanism 34 may be any speed reduction mechanism, and may include a speed reduction mechanism using a counter gear, a speed reduction mechanism using a planetary gear, etc. In the present embodiment, as an example, the speed reduction mechanism 34 includes a planetary gear mechanism, and the speed reduction mechanism 34 is disposed coaxially with the rotating electrical machine 1. An output gear (carrier) 342 of the speed reduction mechanism 34 meshes with the output gear 30 of the differential gear mechanism 5 in the radial direction. Such a vehicle drive device 100 can have a compact configuration with two axes (first axis C1 and second axis C2). In a modification, the vehicle drive device 100 may have three or more axes.

In the present embodiment, the speed reduction mechanism 34 is disposed coaxially with the rotating electrical machine 1 (that is, on the first axis C1) so as to be drivingly connected to the rotating electrical machine 1. In the present embodiment, as an example, the rotor of the rotating electrical machine 1 together with a sun gear 341 of the speed reduction mechanism 34 rotates with the input member 16.

The transmission mechanism 3 further includes a differential gear mechanism 5. The differential gear mechanism 5 distributes, to the pair of output members 6, the driving force transmitted from the rotating electrical machine 1 side. The differential gear mechanism 5 may be disposed coaxially with the pair of output members 6 (that is, on the second axis C2). The differential gear mechanism 5 distributes the driving force transmitted from the rotating electrical machine 1 side to the output gear 30 to the pair of output members 6. That is, the output gear 30 is drivingly connected to both of the pair of output members 6 via the differential gear mechanism 5.

Next, a wiring structure etc. according to the present embodiment will be described with reference to FIG. 3 and the subsequent figures.

FIG. 3 is a top view schematically showing the vehicle drive device 100 according to the present embodiment, and FIG. 4 is a side view schematically showing the vehicle drive device 100 according to the present embodiment. In FIG. 3, an inverter cover member 203 (see FIGS. 2 and 4) that covers the top of an inverter case portion 24 is not shown in order to show elements disposed inside the inverter case portion 24. In FIG. 4, a motor cover member 201 is not shown and the rotor of the rotating electrical machine 1 is also not shown for better understanding of the state in a motor housing chamber S1.

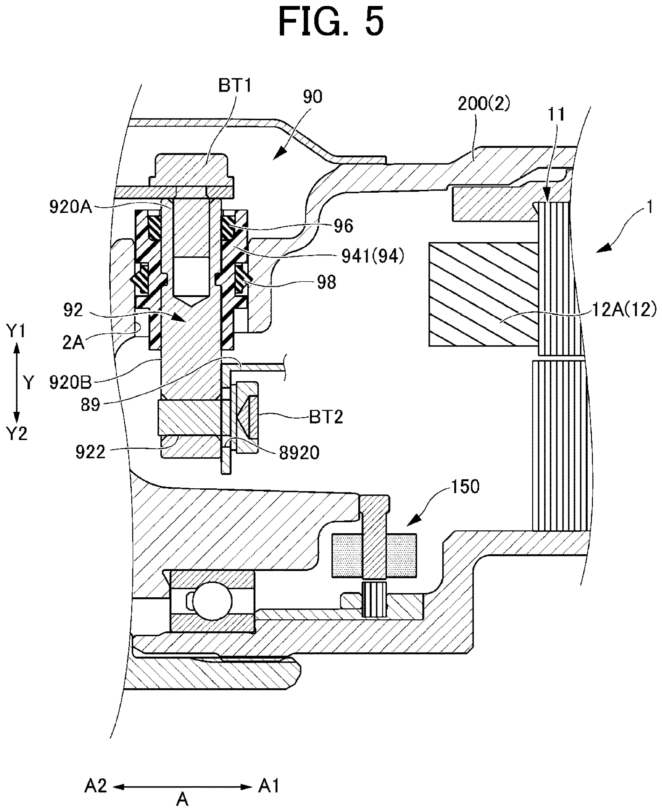

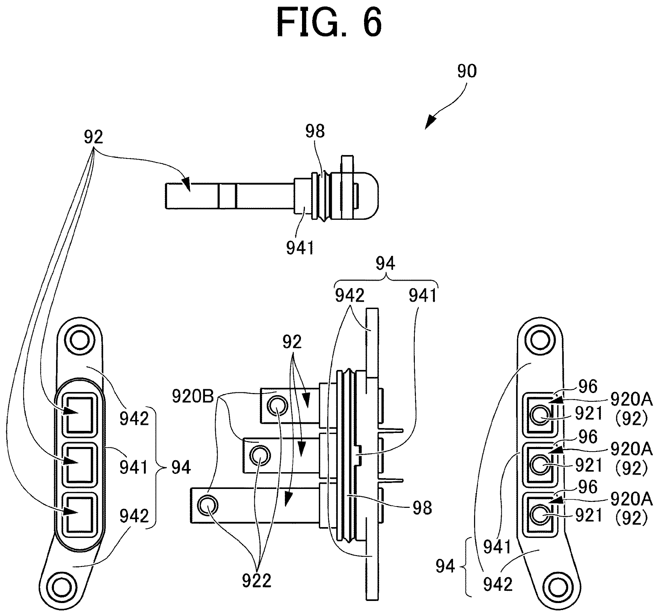

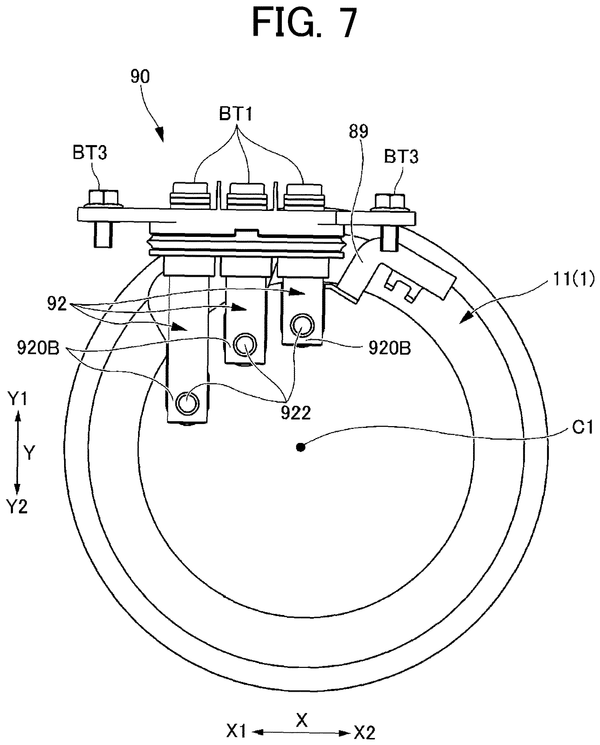

FIG. 5 is a partial sectional view taken along line A-A in FIG. 3, and corresponds to a portion Q5 in FIG. 2. FIG. 6 is a four-view diagram of a terminal device 90. FIG. 7 is an illustration of a manner in which the terminal device 90 and a power line busbar 89 are coupled.

As shown in FIG. 3, it is assumed that the case 2 is formed by joining a case member 200, the motor cover member 201, a differential cover member 202, and the inverter cover member 203 (see FIGS. 2 and 4). The case member 200 forms the motor housing chamber S1, an inverter housing chamber S4, a transmission mechanism housing chamber, an output shaft housing chamber, etc. The joining method may be fastening with bolts etc.

In the present embodiment, the vehicle drive device 100 further includes an inverter device 70, a high-voltage wiring portion 80, and a low-voltage wiring portion 140. The inverter device 70 may be housed in the case 2, or may be disposed at a position separate from the case 2. In the present embodiment, as an example, the inverter device 70 is disposed in the inverter case portion 24 in an upper part of the case 2. As shown in FIGS. 3 and 4, the inverter case portion 24 may be provided above a transmission mechanism case portion 22 and an output shaft case portion 23.

The inverter device 70 is electrically connected between a battery BA (including an energy storage device such as a capacitor) and the rotating electrical machine 1, and performs power conversion between direct current power and alternating current power. The rotating electrical machine 1 is electrically connected to the battery BA via the inverter device 70. The rotating electrical machine 1 is supplied with electric power from the battery BA to perform power running, or supplies electric power generated by the inertial force of the vehicle VC etc. to the energy storage device to store the electric power in the energy storage device.

The high-voltage wiring portion 80 electrically connects the rotating electrical machine 1 to the battery BA. The high-voltage wiring portion 80 includes a busbar member 88 from the inverter device 70, the power line busbar 89, and the terminal device 90.

The busbar member 88 is in the form of three plates corresponding to the three phases, and may include a portion extending linearly in the axial direction. The busbar member 88 may be disposed inside the inverter case portion 24. An end of the busbar member 88 on the A1 side in the A-direction is fastened to the terminal device 90 with bolts BT1. A current sensor 889 is provided on the busbar member 88. The current sensor 889 is provided for each phase, and generates an electrical signal according to the magnitude of the current flowing through the busbar member 88. The current sensor 889 may be in an integrated form with the busbar member 88 that is obtained by resin molding etc. In the example shown in FIG. 3, a terminal of the current sensor 889 is joined on the X2 side to a control board 72 (described later).

The power line busbar 89 may be in the form of three busbars corresponding to the three phases. The power line busbar 89 is extended from a coil end 12A (see FIG. 5) of the rotating electrical machine 1 on the A2 side in the A-direction. The power line busbars 89 may extend further toward the A2 side in the A-direction with respect to an end face of the stator core 11 of the rotating electrical machine 1 on the A2 side in the A-direction. One end of the power line busbar 89 is joined to a stator coil 12 (see FIG. 5) of the rotating electrical machine 1, and the other end thereof is fastened to the terminal device 90 with a bolt BT2. The power line busbar 89 may be implemented as a component of the rotating electrical machine 1.

The terminal device 90 is attached to the case on the A2 side of the rotating electrical machine 1 in the A-direction. The terminal device 90 electrically connects the busbar member 88 and the power line busbar 89 from the rotating electrical machine 1.

As shown in FIG. 6, the terminal device 90 includes a conductor portion 92, a fixing portion 94, a first seal portion 96, and a second seal portion 98.

The conductor portion 92 electrically connects the busbar member 88 and the power line busbar 89. Three conductor portions 92 are provided corresponding to the three phases. The conductor portions 92 may be arranged next to each other in the X-direction. In the present embodiment, as shown in FIG. 7, the conductor portions 92 are arranged in such a manner that the center of each conductor portion 92 is offset toward the X1 side with respect to the first axis C1. However, the conductor portions 92 may be arranged in such a manner that the center of each conductor portion 92 is located on the first axis C1 or that the center of each conductor portion 92 is offset toward the X2 side with respect to the first axis C1.

Each conductor portion 92 may extend in the up-down direction with, for example, an equal cross section (i.e., a cross section taken along a plane perpendicular to the up-down direction is constant). In this case, the cross-sectional shape of each conductor portion 92 may be a rectangle or may be other shape. In the present embodiment, the size and shape of the cross section (cross section taken along a plane perpendicular to the up-down direction) of each conductor portion 92 may be designed so that a screw hole 921 for a bolt BT1 described later can be formed therein.

Each conductor portion 92 is integrated with the fixing portion 94. Each conductor portion 92 extends in the up-down direction with its upper part exposed inside the inverter housing chamber S4 of the inverter case portion 24 and its lower part exposed inside the motor housing chamber S1. The entire conductor portion 92 preferably extends linearly in the up-down direction, or a part of the conductor portion 92 that is located in the motor housing chamber S1 extends linearly in the up-down direction. In this case, the hole shape of a mounting hole 2A (see FIG. 5) of the case 2 for mounting the fixing portion 94 can be reduced in size compared to the case where the part of the conductor portion 92 that is located in the motor housing chamber S1 is bent in the X-direction or the A-direction. The mounting hole 2A is a hole that connects the motor housing chamber S1 and the inverter housing chamber S4, and is closed by mounting the terminal device 90.

The busbar member 88 is fastened to an upper end 920A of each conductor portion 92. As shown in FIG. 6, each conductor portion 92 preferably has, in the upper surface of the upper end 920A, a screw hole 921 for fastening the busbar member 88. A bolt BT1 is tightened into the fastening screw hole 921 through a bolt insertion hole in an end of the busbar member 88. The busbar member 88 is thus fastened in the up-down direction to the upper part of the conductor portion 92 with the bolt BT1. In this case, each conductor portion 92 itself serves as a bolt seat, which can save space. Moreover, no separate structure such as a nut is needed, so that the size of the terminal device 90 can be reduced.

The power line busbar 89 from the rotating electrical machine 1 is fastened to a lower end 920B of each conductor portion 92 with a bolt BT2. The lower end 920B of each conductor portion 92 has, in its side surface facing the A1 side in the A-direction, a screw hole 922 for fastening a bolt BT2. In this case, each conductor portion 92 itself serves as a bolt seat, which can save space. Moreover, no separate structure such as a nut is needed, so that the size of the terminal device 90 can be reduced.

The lower ends 920B of the conductor portions 92 may be disposed at the same axial position, or may be offset from each other in the axial direction. When the lower ends 920B of the conductor portions 92 are disposed at the same axial position, the sizes of a body portion 941 and the mounting hole 2A can be reduced.

As described above, according to the present embodiment, the fastening positions for the bolts BT1, BT2 are respectively set on the upper surface of each linear conductor portion 92 and the side surface of the lower end 920B of each linear conductor portion 92. As a result, according to the present embodiment, the size of the vehicle drive device 100 in a direction crossing the up-down direction can be reduced compared to a comparative configuration (not shown) in which the fastening positions for the bolts BT1, BT2 are offset from each other in this direction.

As shown in FIG. 4, the power line busbar 89 includes a fastening portion 892 extending radially inward at the coil end 12A of the rotating electrical machine 1 on the A2 side in the A-direction. The fastening portion 892 is in the form of a plate, and has a bolt insertion hole 8920. The fastening portions 892 of the power line busbars 89 of the phases contact, in a one-to-one relationship, the side surfaces (side surfaces facing the A1 side in the A-direction) of the lower ends 920B of the conductor portions 92, and are fastened thereto in the axial direction with the bolts BT2. In this case, the bolt insertion hole 8920 (see FIG. 5) may have an inner diameter that is relatively larger than the outer diameter of a shaft portion of the bolt BT2. In the case of such fastening, the level of tolerance for misalignment between each power line busbar 89 and the lower end 920B of a corresponding one of the conductor portions 92 is increased. Therefore, even when an allowable tolerance such as an allowable dimensional tolerance is relatively loosened for the power line busbar 89, significant stress due to tightening of the bolt BT2 is less likely to occur.

In the present embodiment, the lower end 920B of each conductor portion 92 is disposed radially inward of the stator core 11 of the rotating electrical machine 1 as viewed in the axial direction. That is, the connection portion (fastening portion) between each conductor portion 92 and a corresponding one of the power line busbars 89 from the rotating electrical machine 1 is disposed radially inward of the stator core 11 of the rotating electrical machine 1. The work of fastening the conductor portions 92 and the power line busbars 89 from the rotating electrical machine 1 can thus be implemented with ease by using the space radially inward of the stator core 11.

More specifically, in the present embodiment, the terminal device 90 is disposed on the A2 side of the rotating electrical machine 1 in the A-direction, that is, on the opposite side from the motor cover member 201 located on the A1 side in the A-direction, as described above. Such an arrangement is advantageous in that the distance to the busbar member 88 disposed above the transmission mechanism case portion 22 can be reduced (and therefore, the wiring length can be reduced). However, on the other hand, since the axial distance from a case opening that is covered by the motor cover member 201 is increased, the work of tightening the bolts BT2 tends to become less easy.

In the present embodiment, however, the lower end 920B of each conductor portion 92 (i.e., the coupling portion between each conductor portion 92 and a corresponding one of the power line busbars 89) is disposed radially inward of the stator core 11 of the rotating electrical machine 1 as viewed in the axial direction. Therefore, as shown in FIG. 4, in a state before the rotor (not shown) is attached, the lower ends 920B of the conductor portions 92 and the bolt insertion holes 8920 of the power line busbars 89 are visible (i.e., the fastening portions for the bolts BT2 are visible) as viewed in the axial direction. Accordingly, a fastening tool can be easily inserted in the axial direction toward the fastening portions, and the work of fastening each conductor portion 92 and a corresponding one of the power line busbars 89 can be implemented with ease.

The fixing portion 94 may be made of, for example, a resin material. The fixing portion 94 holds each conductor portion 92. The fixing portion 94 is fastened to the case 2 with bolts BT3. The fixing portion 94 includes the body portion 941 and legs 942. The body portion 941 is inserted into and fitted into the mounting hole 2A of the case 2. The body portion 941 has substantially the same outer shape as the mounting hole 2A of the case 2 as viewed in the axial direction, and is disposed so as to close the mounting hole 2A. The legs 942 extend in the X-direction continuously from both sides of the body portion 941 in the X-direction. Each leg 942 has a bolt insertion hole through which the bolt BT3 passes. The bolts BT3 may be tightened into screw holes (not shown) provided in a bottom wall 29 (wall in which the above mounting hole 2A is formed) that forms the inverter housing chamber S4 in the case 2.

The first seal portion 96 seals between the conductor portion 92 and the fixing portion 94. The first seal portion 96 implements a sealing structure against oil inside the terminal device 90. Specifically, the first seal portion 96 prevents oil from entering from the motor housing chamber S1 into the inverter housing chamber S4 through between the conductor portion 92 and the fixing portion 94 of the terminal device 90. This reduces the possibility that oil in the motor housing chamber S1 may leak into the inverter housing chamber S4. The first seal portion 96 is provided for each conductor portion 92, and is formed around the conductor portion 92 so as to closely contact the conductor portion 92 and the fixing portion 94. The first seal portion 96 may be molded integrally with the fixing portion 94. In the example shown in FIG. 5, the first seal portion 96 is provided only in an upper part of the range in the up-down direction in which the conductor portion 92 is surrounded by the fixing portion 94. However, the first seal portion 96 may be provided in the entire range in the up-down direction in which the conductor portion 92 is surrounded by the fixing portion 94, or may be provided in a lower part of the range in the up-down direction in which the conductor portion 92 is surrounded by the fixing portion 94.

The second seal portion 98 seals between the outer periphery of the fixing portion 94 of the terminal device 90 and the case 2. The second seal portion 98 may be provided around the entire outer periphery of the fixing portion 94. The second seal portion 98 is disposed around the body portion 941 of the fixing portion 94 and closely contacts the body portion 941 and the wall surface of the mounting hole 2A. The second seal portion 98 may be made of, for example, a rubber material, and may be in the form of an O-ring. The second seal portion 98 prevents oil from entering from the motor housing chamber S1 into the inverter housing chamber S4 through the mounting hole 2A (particularly between the outer periphery of the fixing portion 94 and the case 2). This reduces the possibility that oil in the motor housing chamber S1 may leak into the inverter housing chamber S4.

In the present embodiment, the screw hole 921 for the bolt BT1 does not extend through the conductor portion 92 in the up-down direction, and is open only on its upper side. The entire bolt BT2 extends into the motor housing chamber S1. Therefore, in the present embodiment, there is no possibility that oil may enter from around the bolt BT1 and around the bolt BT2 (that oil may enter the inverter housing chamber S4). Accordingly, there is no need to provide a separate seal structure above the bolt BT1 etc. This reduces an increase in size due to the seal structure compared to the case where a cap etc. is provided above the bolt BT1 etc.

In other words, according to the present embodiment, the screw hole 922 is provided in the lower end 920B of each conductor portion 92, as described above. This allows the entire bolt BT2 to be located in the motor housing chamber S1. Since each conductor portion 92 extends in the up-down direction, the screw hole 921 for the bolt BT1 can be provided as a non-through hole. This eliminates the need for measures against oil leakage through the bolt BT1 and the bolt BT2, and therefore, can simplify the seal structure.

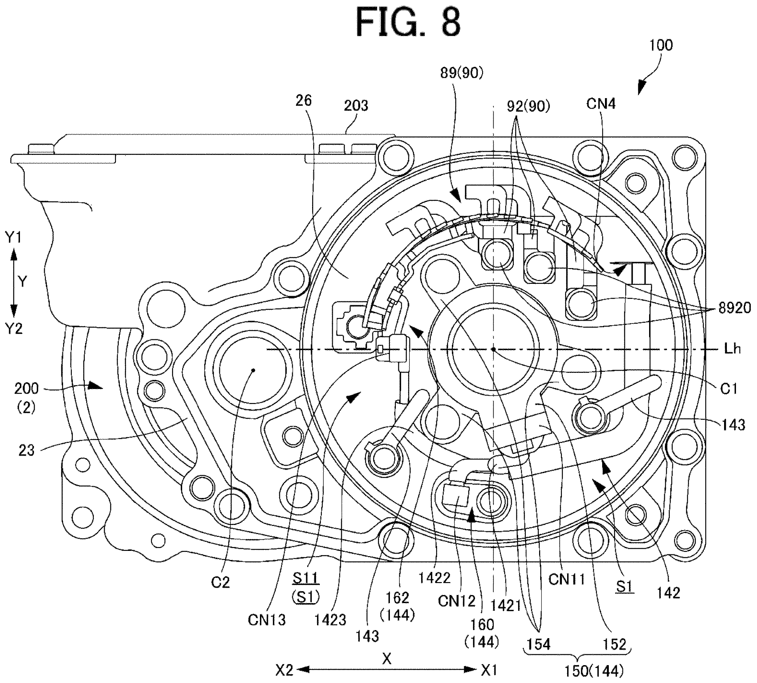

The low-voltage wiring portion 140 electrically connects a plurality of low-voltage components 144 (see FIG. 8) disposed in the motor housing chamber S1 to the control board 72. The low-voltage wiring portion 140 may be in the form of a bundle of harnesses each connected to a corresponding one of the plurality of low-voltage components 144. The control board 72 extends between the inverter device 70 and the inverter cover member 203 so as to cover the upper side of the inverter device 70.

The plurality of low-voltage components 144 includes a rotation angle detection device 150 (rotation angle sensor) described later. Some examples of the low-voltage components 144 will be described later.

The low-voltage wiring portion 140 includes a wiring portion routed inside the inverter housing chamber S4 (hereinafter also referred to as "inverter-side low-voltage wiring portion 141") and a wiring portion routed inside the motor housing chamber S1 (hereinafter also referred to as the "motor chamber-side low-voltage wiring portion 142"). The inverter-side low-voltage wiring portion 141 and the motor chamber-side low-voltage wiring portion 142 are connected via a connector CN4. The connector CN4 is fitted into a through hole (hole in the up-down direction) in the bottom wall 29 of the inverter housing chamber S4 (see FIG. 3).

As shown in FIG. 3, the inverter-side low-voltage wiring portion 141 may be disposed using the space between the terminal device 90 of the high-voltage wiring portion 80 and the sidewall 240 in the axial direction A in the inverter housing chamber S4. In this case, one end of the inverter-side low-voltage wiring portion 141 may be connected to the connector CN4, and the other end thereof may be fixed to the control board 72 via a connector CN2.

The motor chamber-side low-voltage wiring portion 142 will be described in detail later with reference to FIG. 8.

Next, preferred arrangement of the lower ends 920B of the conductor portions 92 and their relationship with other components that may be disposed radially inward of the stator core 11 as viewed in the axial direction will be described with reference again to FIG. 4.

The lower end 920B of each conductor portion 92 is preferably provided above the central axis (first axis C1) of the rotating electrical machine 1. This reduces the possibility or frequency of oil in the motor housing chamber S1 getting on each conductor portion 92.

Other components other than the conductor portions 92 may be disposed radially inward of the stator core 11 as viewed in the axial direction and on the A2 side of the rotating electrical machine 1 in the A direction (particularly near the axial position of the terminal device 90). Among these other components, there may be a component that is desirably disposed at such a position inside the motor housing chamber S1 that oil is less likely to get on the component, i.e., a position above the central axis (first axis C1) of the rotating electrical machine 1. For example, in the example shown in FIG. 4, the rotation angle detection device 150 is disposed as an example of such other components. The rotation angle detection device 150 may be in the form of, for example, a resolver provided around a rotation shaft of the rotating electrical machine 1. A fixed element of the rotation angle detection device 150 has an annular portion 152 and a fastening portion 154. The annular portion 152 is located radially inward of the conductor portions 92 and extends around the central axis (first axis C1) of the rotating electrical machine 1. The fastening portion 154 is fastened to a wall of the case 2 (e.g., a wall extending in a plane crossing the axial direction in such a manner that the wall separates the motor housing chamber S1 and the transmission mechanism housing chamber) with a bolt BT4. For example, as shown in FIG. 4, a plurality of fastening portions 154 may be provided at equal intervals in a circumferential direction. In the example shown in FIG. 4, the fastening portions 154 are provided at intervals of 120 degrees. Unlike the annular portion 152, the fastening portions 154 extend radially outward beyond the conductor portions 92. Therefore, the fastening portions 154 are disposed so as to be offset in the circumferential direction with respect to the conductor portion 92. This allows the lower end 920B of each conductor portion 92 and the rotation angle detection device 150 to be located radially inward of the stator core 11 as viewed in the axial direction and on the A2 side of the rotating electrical machine 1 in the A direction.

From the viewpoint of securing as much space as possible for disposing other components such as the rotation angle detection device 150, it is desirable that the lower end 920B of each conductor portion 92 be located as far away from the central axis (first axis C1) of the rotating electrical machine 1 as possible in the region radially inward of the stator core 11 as viewed in the axial direction. Therefore, the lower end 920B of each conductor portion 92 may be disposed at the farthest position or the uppermost position from the central axis (first axis C1) of the rotating electrical machine 1 in the region radially inward of the stator core 11 as viewed in the axial direction within a range in which necessary clearance is provided between a tool for tightening the bolt BT2 and the inner peripheral surface of the stator core 11. Such a configuration can be implemented by making the lengths of the conductor portions 92 different from each other. In other words, by making the lengths of the conductor portions 92 different from each other, the space for disposing other components such as the rotation angle detection device 150 can be efficiently secured in the region radially inward of the stator core 11 as viewed in the axial direction.

Next, the motor chamber-side low-voltage wiring portion 142 will be described in detail with reference to FIG. 8.

FIG. 8 is a side view schematically showing the vehicle drive device 100 according to the present embodiment. In FIG. 8, the motor cover member 201 is not shown and the rotor of the rotating electrical machine 1 is also not shown for better understanding of the state in the motor housing chamber S1. FIG. 8 shows the motor chamber-side low-voltage wiring portion 142, part of which is not shown in FIG. 4. Although the shapes and positions of the same components are shown slightly different between FIGS. 8 and 4, such differences are not relevant to the description given below with reference to FIG. 8.

FIG. 8 mainly shows components disposed between the rotating electrical machine 1 and a partition wall 26 of the case 2 in the axial direction A out of various components housed in the motor housing chamber S1. That is, FIG. 8 shows the partition wall 26 and the components disposed between the rotating electrical machine 1 and the transmission mechanism 3 (particularly the speed reduction mechanism 34) in the axial direction A out of the various components housed in the motor housing chamber S1. FIG. 8 also shows, as a part of the components of the rotating electrical machine 1, the power line busbar 89 joined to the conductor portion 92 of the terminal device 90. The power line busbar 89 may be in the form of an integrated module obtained by, for example, by resin molding.

In the present embodiment, the conductor portion 92 (and the power line busbar 89) of the terminal device 90 of the high-voltage wiring portion 80 and the motor chamber-side low-voltage wiring portion 142 are disposed in a space S11 (see FIG. 2) between the rotating electrical machine 1 and the partition wall 26 in the axial direction A in the motor housing chamber S1 of the case 2.

The motor housing chamber S1 includes spaces S11, S12 on both sides of the rotating electrical machine 1 in the axial direction A, one space on each side. The space S11 is located between the rotating electrical machine 1 and the partition wall 26 in the axial direction A, and the space S12 is located between the rotating electrical machine 1 and the motor cover member 201 in the axial direction A.

In the present embodiment, of the spaces S11, S12, the conductor portion 92 of the terminal device 90 of the high-voltage wiring portion 80 and the motor chamber-side low-voltage wiring portion 142 are both disposed in the space S11. This arrangement can reduce the wiring length compared to the case where the conductor portion 92 of the terminal device 90 of the high-voltage wiring portion 80 and the motor chamber-side low-voltage wiring portion 142 are disposed in the separate spaces S11, S12. That is, as described above with reference to FIG. 3, this arrangement allows wires to be extended from the upper part of the space S11 into the inverter housing chamber S4, and can thus reduce the wiring length to the inverter housing chamber S4.

In the present embodiment, the motor chamber-side low-voltage wiring portion 142 is provided in a circumferential range different from that of the conductor portion 92 of the terminal device 90 (and the power line busbar 89) out of the circumferential range around the rotating electrical machine 1, as viewed in the axial direction. This allows the motor chamber-side low-voltage wiring portion 142 and the conductor portion 92 of the terminal device 90 (and the power line busbar 89) to be distributed and arranged so as not to overlap each other along the entire circumference of the rotating electrical machine 1 in the space S11. This makes it possible to minimize the dimension of the space S11 in the axial direction A while providing necessary electrical insulation between the motor chamber-side low-voltage wiring portion 142 and the conductor portion 92 of the terminal device 90 (and the power line busbar 89). In other words, it is possible to avoid an increase in dimension of the space S11 in the axial direction A caused by disposing the motor chamber-side low-voltage wiring portion 142 in the space S11. Moreover, the dimension of the space S12 in the axial direction A can be reduced compared to the case where part or all of the motor chamber-side low-voltage wiring portion 142 is disposed in the space S12. As a result, according to the present embodiment, the length of the motor housing chamber S1 in the axial direction A can be reduced.

In the present embodiment, the conductor portion 92 of the terminal device 90 (and the power line busbar 89) is preferably disposed above the axis of the rotating electrical machine 1 (= the rotation shaft on the first axis C1) as viewed in the axial direction. In FIG. 8, a line Lh is a horizontal straight line passing through the axis of the rotating electrical machine 1, and the entire conductor portion 92 of the terminal device 90 (and the power line busbar 89) is preferably located above the line Lh. This can minimize the wiring length between the terminal device 90 and the rotating electrical machine 1 described above. In a modification, only part of the power line busbar 89 may be located below the line Lh.

In the present embodiment, the motor chamber-side low-voltage wiring portion 142 is disposed in an angular range of 180 degrees below the axis of the rotating electrical machine 1 out of the range around the axis of the rotating electrical machine 1 (on the first axis C1). Specifically, the motor chamber-side low-voltage wiring portion 142 is in the form of a harness including the connector CN4 described above at its one end and three connectors CN11, CN12, and CN13 at the other end. As described above with reference to FIG. 3, the connector CN4 is disposed at the end of the inverter housing chamber S4 on the X1 side. Accordingly, the end of the motor chamber-side low-voltage wiring portion 142 on the connector CN4 side is located on the X1 side of the conductor portion 92 in the X-direction as shown in FIG. 8, as viewed in the axial direction. The motor chamber-side low-voltage wiring portion 142 extends from its end on the connector CN4 side, passes below the axis of the rotating electrical machine 1 in a clockwise direction as viewed in FIG. 8, and branches into wiring portions 1421, 1422 to the connectors CN11, CN12 near the lowermost part of the motor housing chamber S1. The connector CN11 is connected to the rotation angle detection device 150 described above (example of the low-voltage components 144). The connector CN12 is connected to an oil temperature sensor 160. The oil temperature sensor 160 is an example of the low-voltage components 144, and generates an electrical signal according to the temperature of oil flowing in the lower part of the motor housing chamber S1. The remaining wiring portion 1423 of the motor chamber-side low-voltage wiring portion 142 is routed further in a clockwise direction as viewed in FIG. 8 from the branching position for the connectors CN11, CN12. The wiring portion 1423 ends such that the connector CN13 is located at approximately the same height (position in the Y-direction) as the axis of the rotating electrical machine 1. The connector CN13 is located on the X2 side with respect to the axis of the rotating electrical machine 1. The connector CN13 is connected to a temperature sensor 162 (example of the low-voltage components 144). The temperature sensor 162 is in the form of, for example, a thermistor, and generates an electrical signal according to the temperature of the rotating electrical machine 1. The temperature sensor 162 may be disposed near a portion of the rotating electrical machine 1 that tends to become relatively hot (e.g., the power line busbar 89). In this case, the motor chamber-side low-voltage wiring portion 142 can be routed by effectively using the space portion located below the axis of the rotating electrical machine 1 (angular range of 180 degrees around the axis) out of the space S11. In other words, the motor chamber-side low-voltage wiring portion 142 can be efficiently disposed in the same space S11 as the conductor portion 92 of the terminal device 90 (and the power line busbar 89).

In the example shown in FIG. 8, the motor chamber-side low-voltage wiring portion 142 is clamped to the partition wall 26 by clamps 143 at two positions across the branch position for CN11, CN12. This appropriately prevents vibration etc. of the motor chamber-side low-voltage wiring portion 142. The number and positions of the clamps 143 are not limited to this, and the clamps 143 may be in other forms.

Although the embodiments are described in detail above, the present disclosure is not limited to the specific embodiments, and various modifications and changes can be made within the scope of the claims. It is also possible to combine all or part of the components of the embodiments described above.

For example, in the above embodiment, it is assumed that oil for, for example, cooling the rotating electrical machine 1 is placed in the motor housing chamber S1. However, the motor housing chamber S1 may be a so-called dry space. That is, cooling of the rotating electrical machine 1 may be implemented by water cooling. In this case, the first seal portion 96 and the second seal portion 98 may be omitted.

In the above embodiment, the vehicle drive device 100 includes the differential gear mechanism 5 in the case 2. However, the differential gear mechanism 5 may be configured to be disposed separately from the case including the rotating electrical machine 1 etc.

### Description of the Reference Numerals

100 ... vehicle drive device, 1 ... rotating electrical machine, 11 stator core, 2 ... case, 34 ... speed reduction mechanism (power transmission device), 70 ... inverter device, 80 ... high-voltage wiring portion (high-voltage system wiring portion), 88 ... busbar member, 89 ... power line busbar (connection conductor from rotating electrical machine), 90 ... terminal device, 92 ... conductor portion, 920A... upper end, 920B ... lower end, 921 ... screw hole, 922 ... screw hole, 94 ... fixing section, 96 ... first seal portion (seal portion), 142 ... motor chamber-side low-voltage wiring portion (low-voltage system wiring portion), 150 ... rotation angle detection device, 152 ... annular portion, 154 ... fastening portion, S1 ... motor housing chamber (housing chamber)

## Claims

1. A vehicle drive device comprising:
a rotating electrical machine;
a power transmission device disposed on one side of the rotating electrical machine in an axial direction and configured to transmit power from the rotating electrical machine to a wheel;
a high-voltage system wiring portion that electrically connects the rotating electrical machine to a power supply;
a case that houses the rotating electrical machine and the power transmission device; and
a low-voltage system wiring portion disposed in a housing chamber of the case that houses the rotating electrical machine, wherein the high-voltage system wiring portion and the low-voltage system wiring portion are disposed between the rotating electrical machine and the power transmission device in the axial direction in the housing chamber.

2. The vehicle drive device according to claim 1, wherein the low-voltage system wiring portion is provided outside the rotating electrical machine in a circumferential range different from a circumferential range of the high-voltage system wiring portion out of a circumferential range around a rotation shaft of the rotating electrical machine, as viewed in the axial direction.

3. The vehicle drive device according to claim 1, wherein the high-voltage system wiring portion is disposed above a rotation shaft of the rotating electrical machine as viewed in the axial direction.

4. The vehicle drive device according to claim 1, wherein the low-voltage system wiring portion is disposed in an angular range of 180 degrees below a rotation shaft of the rotating electrical machine out of a range around the rotation shaft of the rotating electrical machine.

5. The vehicle drive device according to claim 1, further comprising at least two low-voltage components disposed between the rotating electrical machine and the power transmission device in the axial direction in the housing chamber, wherein the low-voltage system wiring portion is electrically connected to the at least two low-voltage components.

6. The vehicle drive device according to claim 1, wherein the at least two low-voltage components include at least two of the following sensors: a rotation angle sensor configured to generate an electrical signal according to a rotation angle of the rotating electrical machine, an oil temperature sensor configured to generate an electrical signal according to a temperature of oil in the housing chamber, and a temperature sensor configured to generate an electrical signal according to a temperature of the rotating electrical machine.

7. The vehicle drive device according to claim 1, wherein:
the high-voltage system wiring portion includes a connection conductor from the rotating electrical machine, and a terminal device attached to the case on the one side of the rotating electrical machine in the axial direction;
the terminal device includes a conductor portion coupled, at a lower end of the conductor portion, to the connection conductor; and
a coupling portion between the conductor portion and the connection conductor is disposed radially inward of a stator core of the rotating electrical machine as viewed in the axial direction.

8. The vehicle drive device according to claim 1, wherein:
the high-voltage system wiring portion further includes a busbar member that electrically connects an inverter device and the conductor portion;
a current sensor configured to generate an electrical signal according to a magnitude of a current flowing through the busbar member is disposed on the busbar member; and
the conductor portion has, in an upper surface of an upper end of the conductor portion, a screw hole for fastening the busbar member.

9. The vehicle drive device according to claim 1, wherein the conductor portion has, in a side surface of the lower end that faces the axial direction, a screw hole for fastening the connection conductor.

10. The vehicle drive device according to claim 1, wherein the terminal device further includes
a fixing portion fixed to the case, and
a seal portion that seals between the conductor portion and the fixing portion.

11. The vehicle drive device according to claim 1, wherein the conductor portion is provided for each phase of the rotating electrical machine having a plurality of phases, and the conductor portion of one of the phases and the conductor portion of another one of the phases have different lengths.

12. The vehicle drive device according to claim 1, further comprising a rotation angle detection device provided around a rotation shaft of the rotating electrical machine on the one side of the rotating electrical machine in the axial direction, the rotation angle detection device including a rotation angle sensor configured to generate an electrical signal according to a rotation angle of the rotating electrical machine, wherein:
the rotation angle detection device includes
an annular portion extending radially inward of the conductor portion as viewed in the axial direction, and
a fastening portion continuous with the annular portion and fixed to the case; and
the fastening portion is offset from the lower end of the conductor portion in a circumferential direction around the rotation shaft of the rotating electrical machine.

13. The vehicle drive device according to any one of claims 7 to 12, wherein the conductor portion is provided for each phase of the rotating electrical machine having a plurality of phases, and the conductor portions are in a linear form and are disposed in an up-down direction so as to be parallel to each other.
